# EUROPEAN PATENT APPLICATION

(11) **EP 3 718 791 A1**
(43) Date of publication of application: **07.10.2020**
(21) Application number: 18881187.1
(22) Date of filing: 14.08.2018
(51) Int. Cl.: B60C 13/02

(54) **HEAVY-DUTY TIRE**

(30) Priority: 27.11.2017 JP 2017226754; 27.11.2017 JP 2017226755
(71) Applicant: Bridgestone Corporation, Tokyo 104-8340 (JP)
(72) Inventor: KITORA, Atsushi, Tokyo 104-8340 (JP)
(74) Representative: Oxley, Robin John George
(86) International application number: PCT/JP2018/030288
(87) International publication number: WO 2019/102663

(57) **Abstract**

A heavy duty tire (1a) includes a tread (4) and a pair of sidewalls (5) connected to both sides of the tread (4). The heavy duty tire (1a) further includes beads (2) connected to the sidewalls (5), and at least one circumferential groove (10) provided on the respective sidewalls (5) in a tire circumferential direction C. The sidewalls (5) each have the maximum width position P2 in a tire width direction. The at least one circumferential groove (10), when a distance between an innermost end position P1 of a carcass ply (3) in a tire radial direction R and the maximum width position P2 is defined as H, is provided between a position P3 with a distance of 1/2H from the maximum width position P2 toward an inner side in the tire radial direction R and a position P4 with a distance of 3/4H from the maximum width position P2 toward an outer side in the tire radial direction R.

## Description

### TECHNICAL FIELD

The present invention relates to a heavy duty tire with a structure capable of improving cut resistance on sidewalls.

### BACKGROUND ART

A technique is known regarding a heavy duty tire having a structure capable of improving cut resistance on sidewalls (Patent Literature 1). The heavy duty tire disclosed in Patent Literature 1 has a recess on the inner side of the respective sidewalls in the tire radial direction. In particular, one end of the recess described in Patent Literature 1 is located on the inner side of a maximum width position of a carcass body in the tire radial direction, and the other end of the recess is located on the outer side of a carcass fold-back position in the tire radial direction. The recess between the respective positions disclosed in Patent Literature 1 is a hollow recessed on the outer surface of the respective sidewalls. The heavy duty tire disclosed in Patent Literature provided with the projection described above can decrease the frequency of hits of obstacles (such as stones) located on a road surface.

### CITATION LIST

### PATENT LITERATURE

Patent Document 1: Japanese Unexamined Patent Application Publication No. 2013-193520

### SUMMARY OF INVENTION

The heavy duty tire disclosed in Patent Literature 1 can decrease the frequency of hits of obstacles on the road surface, but cannot completely avoid all of the hits of obstacles on the road surface. The obstacles hitting against the respective sidewalls may cause cuts. Patent Literature 1 fails to teach a problem of cuts caused on the respective sidewalls, which still needs to be dealt with.

The part of the tire in contact with the ground during rolling is pressed against the surface of the ground and stretched to cause shear deformation. A cut, when caused on the sidewall, leads to a variation in the amount of shear deformation in a region provided with the cut, as compared with a case with no cuts. A shear strain is then increased in the tire radial direction when the cut is caused in the tire radial direction, further promoting the cut according.

To solve the conventional problems described above, the present invention provides a heavy duty tire having a structure capable of preventing a promotion of a cut caused on a sidewall.

### TECHNICAL SOLUTION

A heavy duty tire according to a first aspect of the present invention includes a pair of bead cores, and a carcass ply extending into a toroidal form across the respective bead cores. The heavy duty tire further includes a tread, and a pair of sidewalls connected to both sides of the tread. The heavy duty tire further includes a bead connected to the sidewalls, and at least one circumferential groove provided in a tire circumferential direction on the respective sidewalls. The sidewalls each have a maximum width position in a tire width direction. When a distance between an innermost end position of the carcass ply in a tire radial direction and the maximum width position is defined as H, the at least one circumferential groove is provided between a position with a distance of 1/2H from the maximum width position toward an inner side in the tire radial direction and a position with a distance of 3/4H from the maximum width position toward an outer side in the tire radial direction.

A heavy duty tire according to a second aspect of the present invention includes a pair of bead cores, and a carcass ply extending into a toroidal form across the respective bead cores. The heavy duty tire further includes a tread, and a pair of sidewalls connected to both sides of the tread. The heavy duty tire further includes a bead connected to the sidewalls, and a plurality of radial grooves provided in a tire radial direction on the respective sidewalls. The sidewalls each have a maximum width position in a tire width direction. When a distance between an innermost end position of the carcass ply in the tire radial direction and the maximum width position is defined as H, the radial grooves are provided between a position with a distance of 1/2H from the maximum width position toward an inner side in the tire radial direction and a position with a distance of 3/4H from the maximum width position toward an outer side in the tire radial direction.

### ADVANTAGEOUS EFFECTS

The present invention can provide a heavy duty tire having a structure capable of preventing a promotion of a cut caused on a sidewall.

### BRIEF DESCRIPTION OF DRAWINGS

[Fig. 1] Fig. 1 is a tire-width-direction cross-sectional view in a tire radial direction of a heavy duty tire according to a first embodiment of the present invention.
[Fig. 2] Fig. 2(a) is a side view of the heavy duty tire according to the first embodiment of the present invention as viewed from the side surface, and Fig. 2(b) is a partly-enlarged view of Fig. 2(a).
[Fig. 3] Fig. 3(a) and Fig. 3(b) are views each illustrating a shape of circumferential grooves according to the first embodiment of the present invention.
[Fig. 4] Fig. 4 is a view illustrating shear deformation during rolling of a tire.
[Fig. 5] Fig. 5(a) is a view illustrating a state of a tire with no load applied, and Fig. 5(b) is a view illustrating shear deformation of the tire when a load is applied.
[Fig. 6] Fig. 6(a) is a view illustrating a state of the tire (provided with a cut) with no load applied, and Fig. 6(b) is a view illustrating shear deformation of the tire (provided with the cut) when a load is applied.
[Fig. 7] Fig. 7(a) to Fig. 7(c) are views illustrating a promotion of a cut due to a shear strain to be displaced in the tire radial direction.
[Fig. 8] Fig. 8 is a graph showing results of experiments on a strain at a cut bottom in the first embodiment of the present invention and a comparative example.
[Fig. 9] Fig. 9 is a tire-width-direction cross-sectional view in a tire radial direction of a heavy duty tire according to a second embodiment of the present invention.
[Fig. 10] Fig. 10(a) is a side view of the heavy duty tire according to the second embodiment of the present invention as viewed from the side surface, and Fig. 10(b) is a partly-enlarged view of Fig. 10(a).
[Fig. 11] Fig. 11(a) and Fig. 11(b) are views each illustrating a shape of circumferential grooves according to the second embodiment of the present invention.
[Fig. 12] Fig. 12 is a graph showing results of experiments on a strain at a cut bottom in the second embodiment of the present invention and a comparative example.
[Fig. 13] Fig. 13 is a view illustrating circumferential grooves and radial grooves according to a third embodiment of the present invention.
[Fig. 14] Fig. 14 is a view illustrating shear deformation according to the third embodiment of the present invention.
[Fig. 15] Fig. 15 is a graph showing results of experiments on a strain at a cut bottom in the third embodiment of the present invention and a comparative example.
[Fig. 16] Fig. 16 is a view illustrating circumferential grooves and radial grooves according to a fourth embodiment of the present invention.
[Fig. 17] Fig. 17 is a view illustrating shear deformation according to the fourth embodiment of the present invention.
[Fig. 18] Fig. 18 is a view illustrating a relation between the circumferential grooves and reference surfaces of a contour line of the heavy duty tire 1a.
[Fig. 19] Fig. 19 is a partly-enlarged view of Fig. 1.
[Fig. 20] Fig. 20(a) to Fig. 20(c) are views each illustrating a shape of circumferential grooves.

### DESCRIPTION OF EMBODIMENTS

Hereinafter, embodiments according to the present invention will be described with reference to the drawings. The same elements illustrated in the drawings are indicated by the same reference numerals, and overlapping explanations are not made below.

### (First Embodiment)

### (Structure of Heavy Duty Tire)

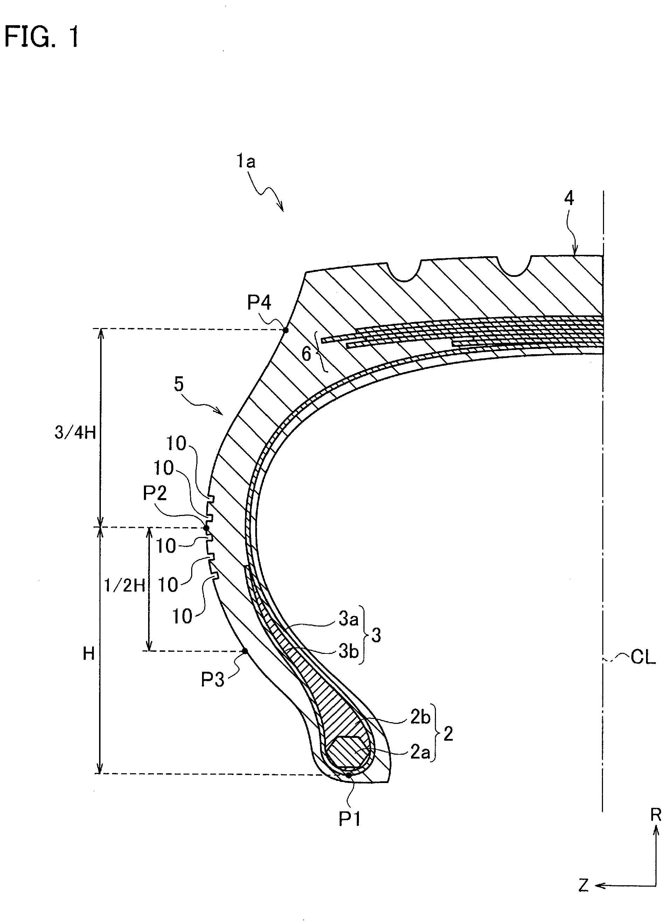

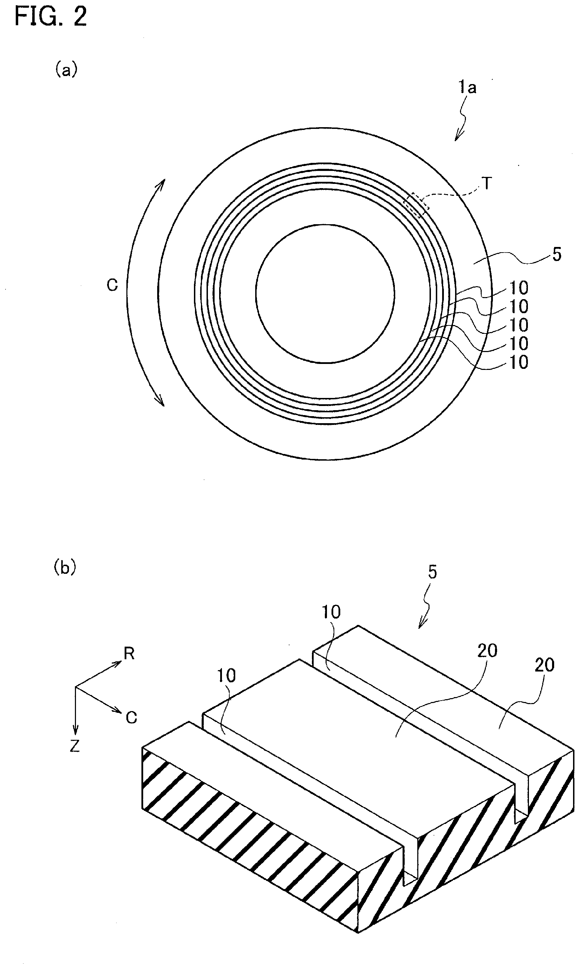

A structure of a heavy duty tire 1a according to a first embodiment is described below with reference to Fig. 1 and Fig. 2. The heavy duty tire 1a according to the first embodiment is used for a heavy duty vehicle such as a construction vehicle. In the descriptions of the drawings, the reference signs R, C, and Z respectively refer to a tire radial direction, a tire circumferential direction, and a tire width direction.

As shown in Fig. 1, the heavy duty tire 1a includes a pair of beads 2, a carcass ply 3 forming a framework of the heavy duty tire 1a, a tread 4 having a contact surface brought into contact with a surface of a road, and a pair of sidewalls 5 connected to both sides of the tread 4. The heavy duty tire 1a has a symmetrical shape about a tire equatorial line CL.

The beads 2 each include a bead core 2a and bead filler 2b. The beads 2 are connected to the sidewalls 5. At least two bead cores 2a are arranged separately from each other in the tire width direction Z. The bead cores 2a each support a code tension applied to the carcass ply 3 caused by an internal pressure of the heavy duty tire 1a.

The bead filler 2b is rubber material for reinforcing each bead core 2a, and is filled in a space provided such that the end portion on each side of the carcass ply 3 is folded back to the outside in the tire width direction at the position of the bead core 2a.

The carcass ply 3 extends into a toroidal form across each bead core 2a. The carcass ply 3 includes a carcass body 3a located between the bead cores 2a, and a carcass fold-back portion 3b folded back from the inner side to the outer side of each bead core 2a in the tire width direction Z.

A plurality of belt layers 7 are provided between the carcass ply 3 and the tread 4. The belt layers 7 are arranged in layers along the tire circumferential direction C. The tread 4 is provided with a predetermined tread pattern. The sidewalls 5 each have a maximum width position P2 in the tire width direction Z.

As shown in Fig. 1 and Fig. 2(a), the respective sidewalls 5 are provided with a plurality of circumferential grooves 10 formed into a circular shape in the tire circumferential direction C. Fig. 2(b) is an enlarged view of region T shown in Fig. 2(a). As shown in Fig. 2(b), the circumferential grooves 10 define a plurality of block portions 20 on the respective sidewalls 5.

The positions of the circumferential grooves 10 to be located are described below. As shown in Fig. 1, a distance between an innermost end position P1 of the carcass ply 3 in the tire radial direction R and the maximum width position P2 of the sidewall 5 is defined by reference sign H. A position having a distance which is 1/2 H from the maximum width position P2 toward the inner side in the tire radial direction R is defined by reference sign P3, and a position having a distance which is 3/4 H from the maximum width position P2 toward the outer side in the tire radial direction R is defined by reference sign P4. The circumferential grooves 10 are provided between the position P3 and the position P4. The circumferential groove 10 may be provided at the maximum width position P2.

The number of the circumferential grooves 10 is not limited to five shown in Fig. 2(a). The single circumferential groove 10 may be provided, or the number of the circumferential grooves 10 may be two to four. While Fig. 2(a) illustrates the case in which the circumferential grooves 10 are arranged in parallel, the arrangement is not limited to this case.

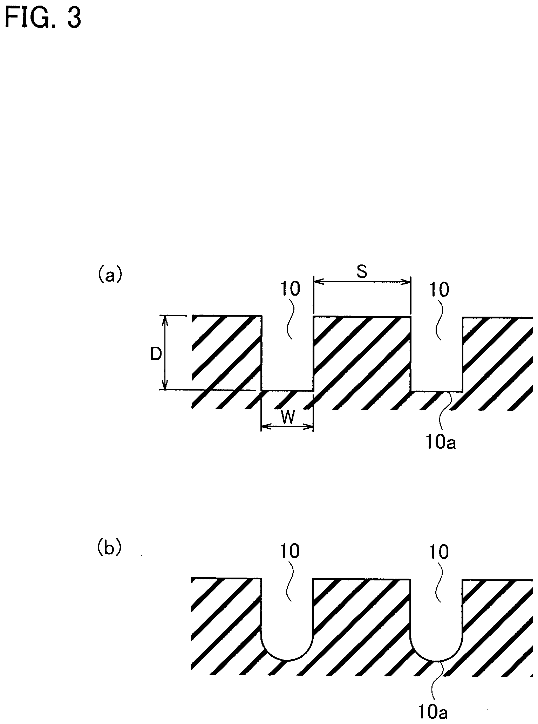

The circumferential grooves 10 are described in more detail below with reference to Fig. 3(a) and Fig. 3(b). A groove width W of the circumferential grooves 10 as shown in Fig. 3(a) is set in a range of 4 to 6 mm, for example. A groove depth D of the circumferential grooves 10 is set in a range of 4 to 6 mm, for example. A space S between the circumferential grooves 10 adjacent to each other is set in a range of 5 to 30 mm, for example. A ratio S/W of the space S to the groove width W is set in a range of 0.5 to 10, for example. The ratio S/W may be set in a range of 0.7 to 6, or may be set in a range of 0.8 to 4. As shown in Fig. 3(a) and Fig. 3(b), a groove bottom 10a of the respective circumferential grooves 10 may have a rectangular shape, or may have a shape having a predetermined degree of curvature. A radius of curvature of the groove bottom 10a shown in Fig. 3(b) is set in a range of 2 to 5 mm, for example. The curvature of the groove bottom 10a is thus in a range of 0.2 to 0.5 mm, for example.

### (Operational Effects)

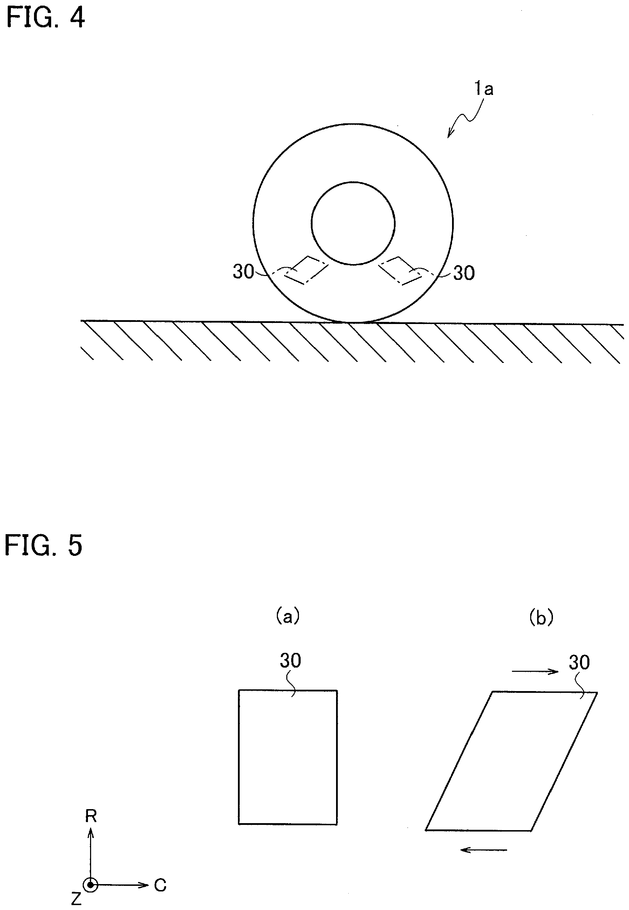

The operational effects of the heavy duty tire 1a according to the first embodiment are described below with reference to Fig. 4 to Fig. 7. The heavy duty tire 1a is illustrated below with a case in which a cut is caused in the tire radial direction.

As shown in Fig. 4, when the heavy duty tire 1a is rolling, a region 30 in the heavy duty tire 1a is pressed against the surface of the ground and stretched. A shear strain is then caused in the region 30 in the tire circumferential direction to lead to shear deformation, as shown in Fig. 5(b). As used herein, the region 30 refers to a region in which the shear deformation tends to be caused, such as an advancing region or a kicking back region during rolling of the tire. Fig. 5(a) illustrates the region 30 with no load applied.

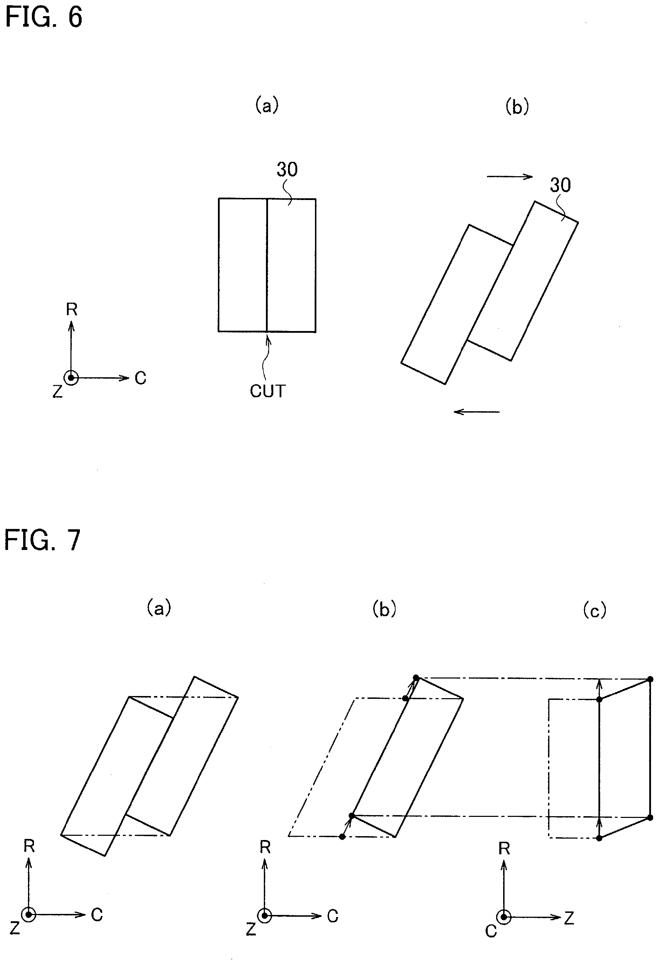

A cut may be caused on the sidewall 5 when an obstacle such as a stone hits against the sidewall 5 during rolling of the heavy duty tire 1a. The cut leads to a variation in the amount of shear deformation in the region 30 provided with the cut, as compared with a case with no cut provided. In particular, as shown in Fig. 6(b), the shear strain is caused not only in the tire circumferential direction C, which is the same as the case with no cut provided, but also in the tire radial direction R to lead the cut to be displaced. Fig. 6(a) illustrates a state of the region 30 with no load applied.

A promotion of the cut due to the shear strain to be displaced in the tire radial direction R is described below. Fig. 7(a) is a synthesized view of the shear strain illustrated in Fig. 5(b) with no cut provided and the shear strain illustrated in Fig. 6(b) provided with the cut.

Fig. 7(b) is a view taken out from the synthesized view of Fig. 7(a) while the tire radial direction R is defined as the vertical axis and the tire circumferential direction C is defined as the horizontal axis. As shown in Fig. 7(b), the region 30 provided with the cut has greater shear strain on the RC plane than the case with no cut provided.

Fig. 7(c) is a view taken out from the synthesized view of Fig. 7(a) while the tire radial direction R is defined as the vertical axis and the tire width direction Z is defined as the horizontal axis. As shown in Fig. 7(c), the region 30 provided with the cut has greater shear strain on the RZ plane than the case with no cut provided. The region 30 provided with the cut has the greater shear strain on both the RC plane and the RZ plane than the case with no cut provided, resulting in the increase in the amount of the shear deformation. The combination of the differences between the amount of the shear deformation on the RC plane and the amount of the shear deformation on the RZ plane leads to the promotion of the cut in the inclined depth direction on the CZ plane at the bottom of the cut caused in the region 30.

To suppress the promotion of the cut described above, the first embodiment provides the circumferential grooves 10 on the respective sidewalls 5 to define the block portions 20, as shown in Fig. 2. The block portions 20 do not easily follow the shear deformation caused in the region 30. Namely, the shear deformation is reduced in the block portions 20 as compared with the region 30. The shear strain at the cut bottom in the block portions 20 is also reduced accordingly. The heavy duty tire 1a according to the first embodiment thus can avoid the promotion of the cut if caused on the sidewall 5. The groove depth of the circumferential grooves 10 may be set to be greater than the cut groove. The reason is that the block portions 20 tend to follow the shear deformation caused in the region 30 if the groove depth of the circumferential grooves 10 is less than the cut groove.

### (Results of Experiments)

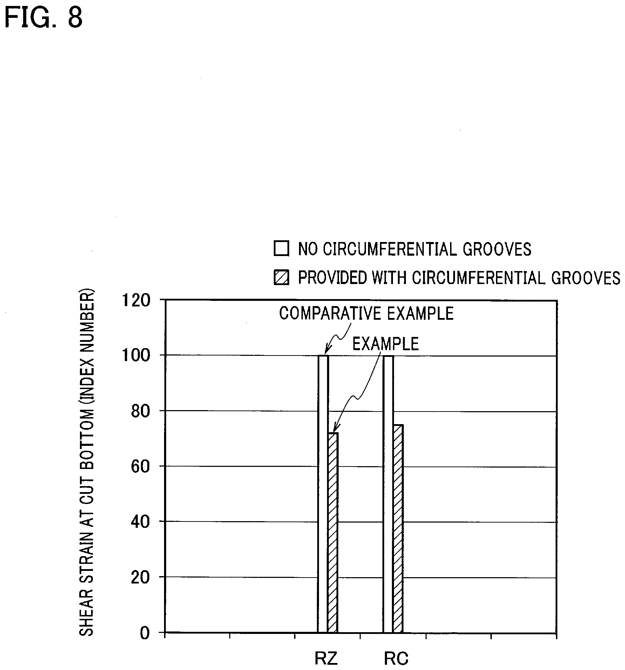

The present inventor carried out experiments on a tire of an example (referred to below as "Example") used as the heavy duty tire 1a according to the first embodiment and a tire of a comparative example (referred to below as "Comparative Example") not provided with the circumferential grooves 10 so as to evaluate the performance. Fig. 8 shows the results of the experiments. Fig. 8 indicates Comparative Example with an evaluation index number set to 100 and Example having a relative value with respect to Comparative Example. The results show that the performance is better as the index number is smaller. Evaluation revealed that, as shown in Fig. 8, Example had the index number in the RZ direction which was 72 and the index number in the RC direction which was 75, indicating that the shear strain at the cut bottom was avoided as compared with Comparative Example.

### (Second Embodiment)

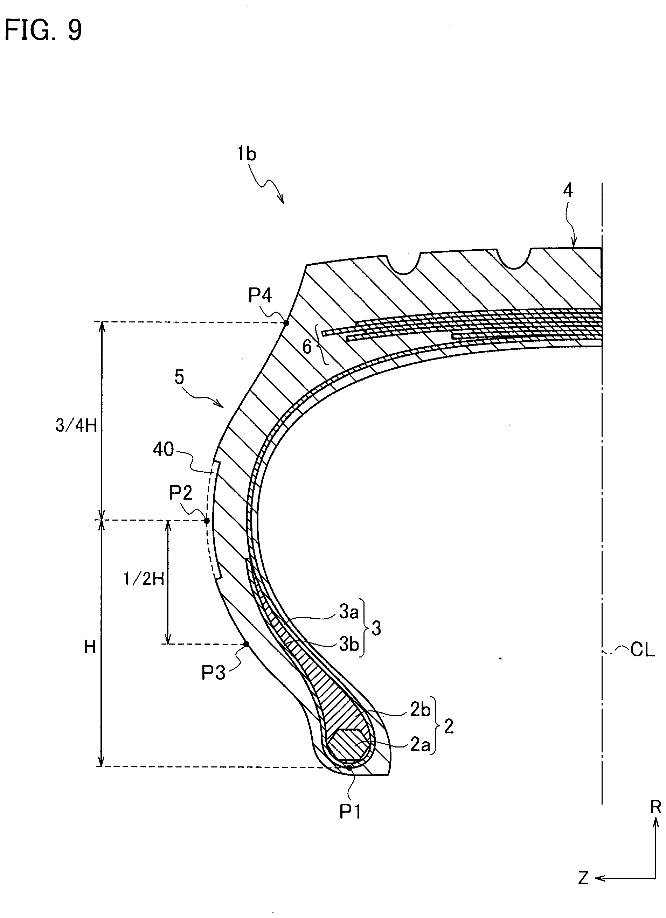

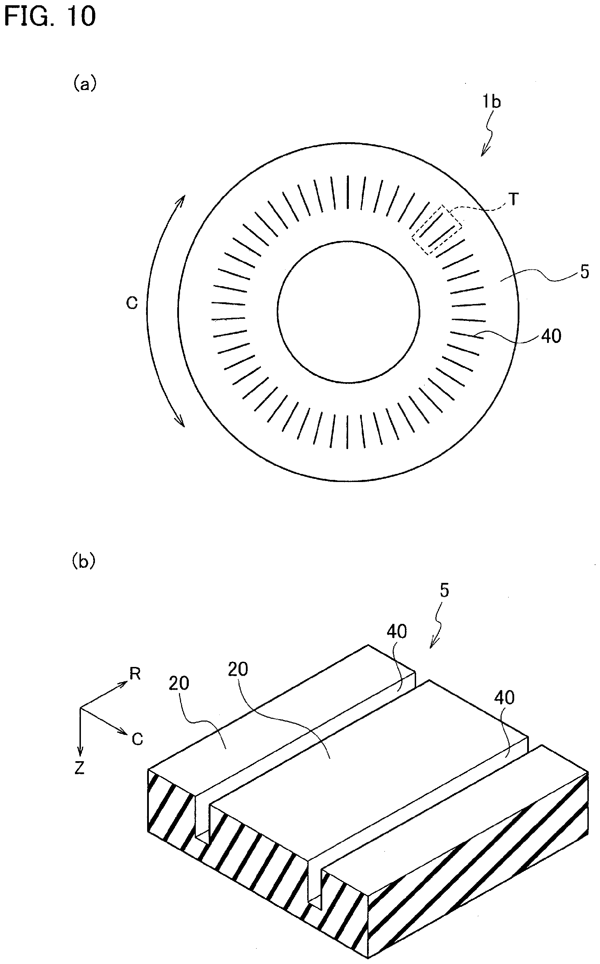

A second embodiment according to the present embodiment is described below with reference to Fig. 9 and Fig. 10. The second embodiment differs from the first embodiment in that a heavy duty tire 1b according to the second embodiment has a plurality of radial grooves 40 instead of the circumferential grooves 10. The same elements as in the first embodiment are denoted by the same reference numerals, and overlapping explanations are not repeated below. The differences are mainly described in detail below.

As shown in Fig. 9 and Fig. 10, the respective sidewalls 5 are provided with the plural radial grooves 40 extending in the tire radial direction R. Fig. 10(b) is an enlarged view of region T shown in Fig. 10(a). As shown in Fig. 10(b), the radial grooves 40 define the plural block portions 20 on the respective sidewalls 5.

The positions of the radial grooves 40 to be located are described below. As shown in Fig. 9, the radial grooves 40 are provided between the position P3 and the position P4. The radial groove 40 may be provided at the maximum width position P2.

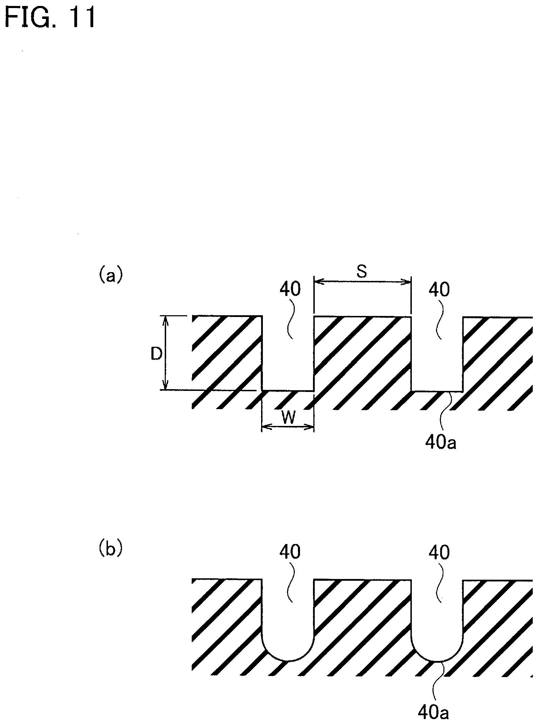

The radial grooves 40 are described in more detail below with reference to Fig. 11(a) and Fig. 11(b). A groove width W of the radial grooves 40 as shown in Fig. 11(a) is set in a range of 4 to 6 mm, for example. A groove depth D of the radial grooves 40 is set in a range of 4 to 6 mm, for example. A space S between the radial grooves 40 adjacent to each other is set in a range of 5 to 30 mm, for example. A ratio S/W of the space S to the groove width W is set in a range of 0.5 to 10, for example. The ratio S/W may be set in a range of 0.7 to 6, or may be set in a range of 0.8 to 4. As shown in Fig. 11(a) and Fig. 11(b), a groove bottom 40a of the respective radial grooves 40 may have a rectangular shape, or may have a shape having a predetermined degree of curvature. A radius of curvature of the groove bottom 40a shown in Fig. 11(b) is set in a range of 2 to 5 mm, for example. The curvature of the groove bottom 40a is thus in a range of 0.2 to 0.5 mm, for example.

### (Operational Effects)

The operational effects of the heavy duty tire 1b according to the second embodiment are similar to those of the heavy duty tire 1a as described with reference to Fig. 4 to Fig. 7, and the specific explanations are not repeated below.

### (Results of Experiments)

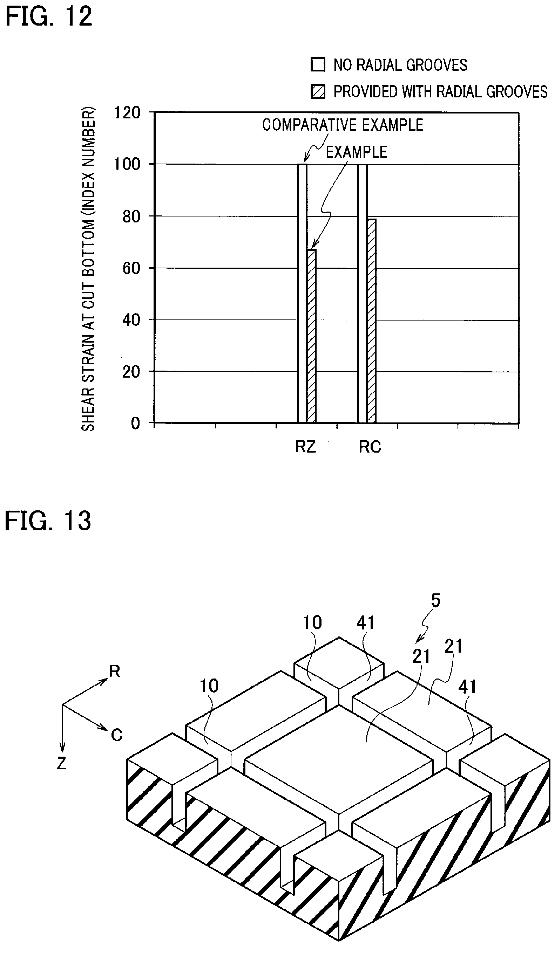

The present inventor carried out experiments on a tire of an example (referred to below as "Example") used as the heavy duty tire 1b according to the second embodiment and a tire of a comparative example (referred to below as "Comparative Example") not provided with the radial grooves 40 so as to evaluate the performance. Fig. 12 shows the results of the experiments. Fig. 12 indicates Comparative Example with an evaluation index number set to 100 and Example having a relative value with respect to Comparative Example. The results show that the performance is better as the index number is smaller. Evaluation revealed that, as shown in Fig. 12, Example had the index number in the RZ direction which was 67 and the index number in the RC direction which was 80, indicating that the shear strain at the cut bottom was avoided as compared with Comparative Example.

### (Third Embodiment)

A third embodiment according to the present embodiment is described below with reference to Fig. 13. The third embodiment differs from the first embodiment in further having radial grooves 41. The same elements as in the first embodiment are denoted by the same reference numerals, and overlapping explanations are not repeated below. The differences are mainly described in detail below.

As shown in Fig. 13, the respective sidewalls 5 are provided with the plural (two in Fig. 13) radial grooves 41 extending in the tire radial direction R in addition to the circumferential grooves 10. The circumferential grooves 10 and the radial grooves 41 define a plurality of block portions 21 into a lattice state on the respective sidewalls 5. The radial grooves 41 are provided between the position P3 and the position P4 shown in Fig. 1, as in the case of the circumferential grooves 10. A groove width of the radial grooves 41 is set in a range of 4 to 6 mm, for example. A groove depth of the radial grooves 41 is set in a range of 4 to 6 mm, for example. A space between the radial grooves 41 adjacent to each other is set in a range of 5 to 30 mm, for example. A ratio of the space between the adjacent radial grooves 41 to the groove width of the radial grooves 41 is set in a range of 0.5 to 10, for example. The ratio may be set in a range of 0.7 to 6, or may be set in a range of 0.8 to 4. A groove bottom of the respective radial grooves 41 may have a rectangular shape, or may have a shape having a predetermined degree of curvature (not shown). A radius of curvature of the groove bottom of the radial grooves 41 is set in a range of 2 to 5 mm, for example. The curvature of the groove bottom of the radial grooves 41 is thus in a range of 0.2 to 0.5 mm, for example.

### (Operational Effects)

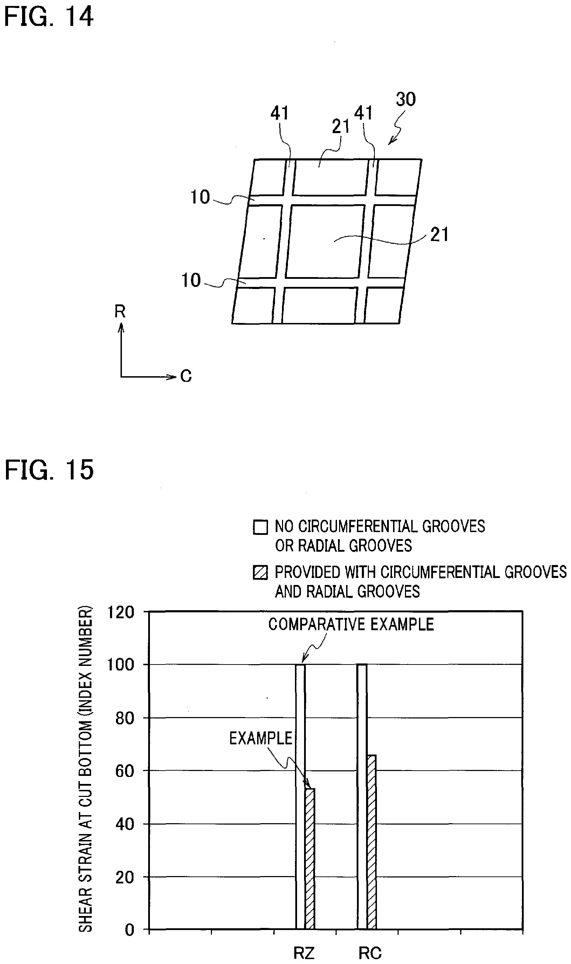

The operational effects of the heavy duty tire 1a according to the third embodiment are described below with reference to Fig. 14. As shown in Fig. 14, the region 30 including the plural block portions 21 is deformed into a parallelogram because of shear deformation. Each of the block portions 21, when subjected to the shear deformation into a parallelogram, has an acute angle which is nearly 90 degrees, as compared with the acute angle of the region 30. Namely, the block portions 21 do not easily follow the shear deformation caused in the region 30. The shear deformation is thus reduced in the block portions 21 as compared with the region 30. The shear strain at the cut bottom in the block portions 21 is also reduced accordingly. The heavy duty tire 1a according to the third embodiment thus can avoid the promotion of the cut caused on the sidewall 5. The groove depth of the circumferential grooves 10 and the radial grooves 41 may be set to be greater than the cut groove. The reason is that the block portions 21 tend to follow the shear deformation caused in the region 30 if the groove depth of the circumferential grooves 10 and the radial grooves 41 is less than the cut groove.

### (Results of Experiments)

The present inventor carried out experiments on a tire of an example (referred to below as "Example") used as the heavy duty tire 1a according to the third embodiment and a tire of a comparative example (referred to below as "Comparative Example") not provided with the circumferential grooves 10 or the radial grooves 41 so as to evaluate the performance. Fig. 15 shows the results of the experiments. Fig. 15 indicates Comparative Example with an evaluation index number set to 100 and Example having a relative value with respect to Comparative Example. The results show that the performance is better as the index number is smaller. Evaluation revealed that, as shown in Fig. 15, Example had the index number in the RZ direction which was 54 and the index number in the RC direction which was 67, indicating that the shear strain at the cut bottom was greatly avoided as compared with Comparative Example.

### (Fourth Embodiment)

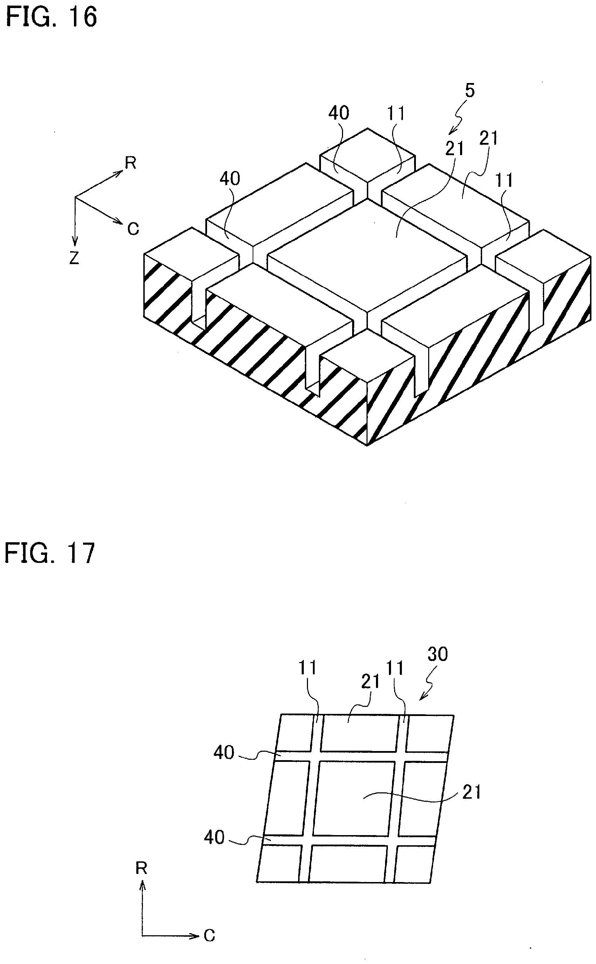

A fourth embodiment according to the present embodiment is described below with reference to Fig. 16. The fourth embodiment differs from the second embodiment in further having circumferential grooves 11. The same elements as in the second embodiment are denoted by the same reference numerals, and overlapping explanations are not repeated below. The differences are mainly described in detail below.

As shown in Fig. 16, the respective sidewalls 5 are provided with a plurality of circumferential grooves 11 extending in the tire radial direction R in addition to the radial grooves 40. The radial grooves 40 and the circumferential grooves 11 define the plural block portions 21 into a lattice state on the respective sidewalls 5. The circumferential grooves 11 are provided between the position P3 and the position P4 shown in Fig. 9, as in the case of the radial grooves 40. A groove width of the circumferential grooves 11 is set in a range of 4 to 6 mm, for example. A groove depth of the circumferential grooves 11 is set in a range of 4 to 6 mm, for example. A space between the circumferential grooves 11 adjacent to each other is set in a range of 5 to 30 mm, for example. A ratio of the space between the adjacent circumferential grooves 11 to the groove width of the circumferential grooves 11 is set in a range of 0.5 to 10, for example. The ratio may be set in a range of 0.7 to 6, or may be set in a range of 0.8 to 4. A groove bottom of the respective circumferential grooves 11 may have a rectangular shape, or may have a shape having a predetermined degree of curvature (not shown). A radius of curvature of the groove bottom of the circumferential grooves 11 is set in a range of 2 to 5 mm, for example. The curvature of the groove bottom of the circumferential grooves 11 is thus in a range of 0.2 to 0.5 mm, for example. The number of the circumferential grooves 11 is not limited to two shown in Fig. 16. The single circumferential groove 11 may be provided, or the number of the circumferential grooves 10 may be three to five. The circumferential grooves 11 are only required to be provided between the position P3 and the position P4, and the circumferential groove 10 may be provided at the maximum width position P2.

### (Operational Effects)

The operational effects of the heavy duty tire 1b according to the fourth embodiment are described below with reference to Fig. 17. As shown in Fig. 17, the region 30 including the plural block portions 21 is deformed into a parallelogram because of shear deformation. Each of the block portions 21, when subjected to the shear deformation into a parallelogram, has an acute angle which is nearly 90 degrees, as compared with the acute angle of the region 30. Namely, the block portions 21 do not easily follow the shear deformation caused in the region 30. The shear deformation is thus reduced in the block portions 21 as compared with the region 30. The shear strain at the cut bottom in the block portions 21 is also reduced accordingly. The heavy duty tire 1b according to the fourth embodiment thus can avoid the promotion of the cut caused on the respective sidewalls 5. The groove depth of the radial grooves 40 and the circumferential grooves 11 may be set to be greater than the cut groove. The reason is that the block portions 21 tend to follow the shear deformation caused in the region 30 if the groove depth of the radial grooves 40 and the circumferential grooves 11 is less than the cut groove.

### (Results of Experiments)

The present inventor carried out experiments on a tire of an example (referred to below as "Example") used as the heavy duty tire 1b according to the fourth embodiment and a tire of a comparative example (referred to below as "Comparative Example") not provided with the radial grooves 40 or the circumferential grooves 11 so as to evaluate the performance. Fig. 15 shows the results of the experiments. Fig. 15 indicates Comparative Example with an evaluation index number set to 100 and Example having a relative value with respect to Comparative Example. The results show that the performance is better as the index number is smaller. Evaluation revealed that, as shown in Fig. 15, Example had the index number in the RZ direction which was 54 and the index number in the RC direction which was 67, indicating that the shear strain at the cut bottom was greatly avoided as compared with Comparative Example.

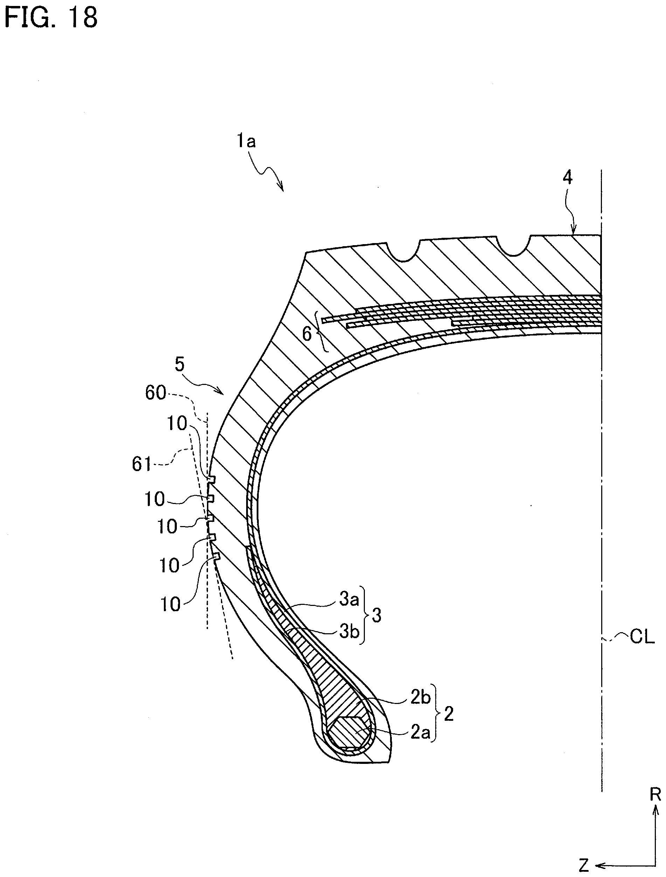

As shown in Fig. 18, when the contour line of the heavy duty tire 1a is defined as a reference surface, the circumferential grooves 10 are provided on the inner side of the reference surface in the tire width direction. The reference surface may also be referred to as a tangent to the contour line. The circumferential grooves 10 are thus provided on the inner side of any of tangents 60 and 61 to the contour line in the tire width direction.

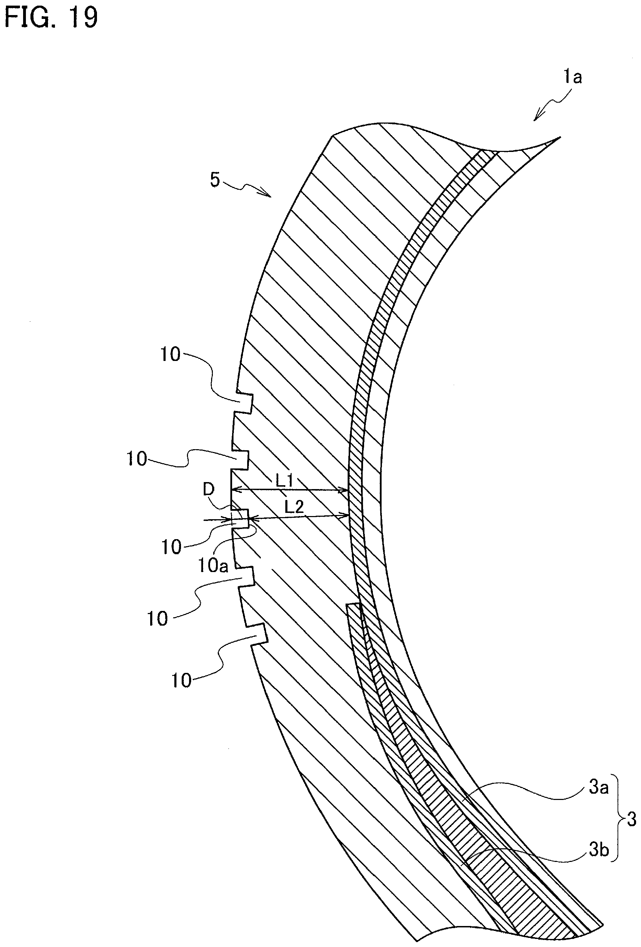

As shown in Fig. 19, a rubber gauge thickness L1 of the sidewall 5 is set in a range of 5 to 20 mm, for example. A rubber gauge thickness L2 from the groove bottom 10a to the carcass ply 3 is set in a range of 2 to 10 mm, for example. A ratio D/L2 of the groove depth D to the rubber gauge thickness L2 is set in a range of 0.1 to 3.5, for example. The ratio D/L2 may be in a range of 0.2 to 2.5, or may be in a range of 0.3 to 1.8.

While the present invention has been described above by reference to the respective embodiments, it should be understood that the present invention is not intended to be limited to the descriptions and the drawings composing part of this disclosure. Various alternative embodiments, examples, and technical applications will be apparent to those skilled in the art according to this disclosure.

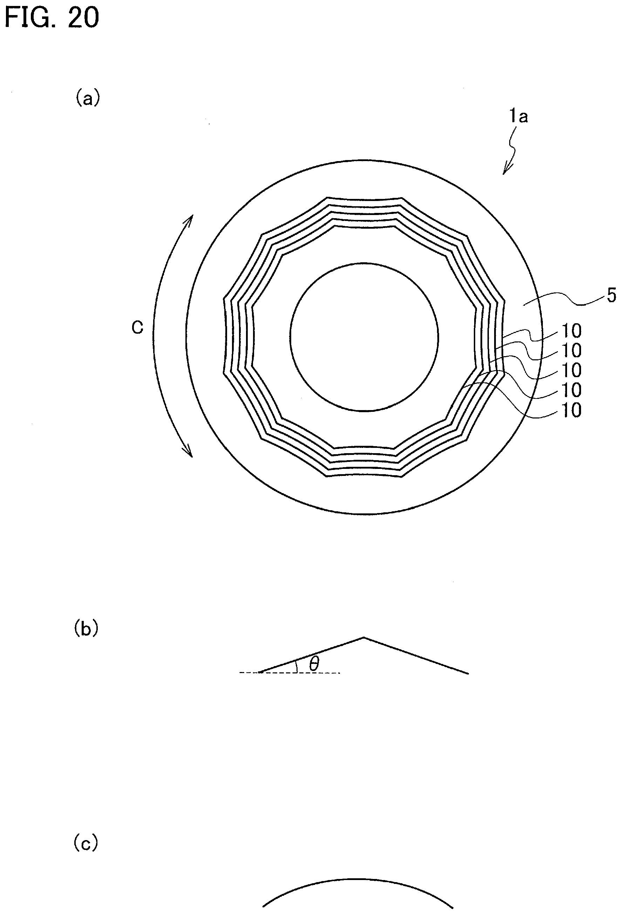

For example, the circumferential grooves 10 may have a concave-convex waveform, as shown in Fig. 20(a). Alternatively, the circumferential grooves 10 may have an angular shape having a predetermined angle θ, as shown in Fig. 20(b). The predetermined angle θ to the horizontal direction is in a range of zero to 50 degrees. The predetermined angle θ, if greater than 50 degrees, adversely increases the shear strain caused at the groove bottom of the circumferential grooves 10. Alternatively, the circumferential grooves 10 may have a shape having a predetermined degree of curvature, as shown in Fig. 20(c).

This application is based upon and claims the benefit of priority from Japanese Patent Application No. 2017-226754 filed on November 27, 2017 and from Japanese Patent Application No. 2017-226755 filed on November 27, 2017 the entire contents of which are incorporated herein by reference.

### REFERENCE SIGNS LIST

- 1a, 1b: HEAVY DUTY TIRE
- 2: BEAD
- 2a: BEAD CORE
- 2b: BEAD FILLER
- 3: CARCASS PLY
- 3a: CARCASS BODY
- 3b: CARCASS FOLD-BACK PORTION
- 4: TREAD
- 5: SIDEWALL
- 7: BELT LAYER
- 10, 11: CIRCUMFERENTIAL GROOVE
- 10a: GROOVE BOTTOM
- 20, 21: BLOCK PORTION
- 30: REGION
- 40, 41: RADIAL GROOVE
- 40a: GROOVE BOTTOM

## Claims

1. A heavy duty tire comprising:
a pair of bead cores;
a carcass ply extending into a toroidal form across the respective bead cores;
a tread;
a pair of sidewalls connected to both sides of the tread;
a bead connected to the sidewalls; and
at least one circumferential groove provided in a tire circumferential direction on the respective sidewalls,
the sidewalls each having a maximum width position in a tire width direction,
when a distance between an innermost end position of the carcass ply in a tire radial direction and the maximum width position is defined as H, the at least one circumferential groove being provided between a position with a distance of 1/2H from the maximum width position toward an inner side in the tire radial direction and a position with a distance of 3/4H from the maximum width position toward an outer side in the tire radial direction.

2. A heavy duty tire comprising:
a pair of bead cores;
a carcass ply extending into a toroidal form across the respective bead cores;
a tread;
a pair of sidewalls connected to both sides of the tread;
a bead connected to the sidewalls; and
a plurality of radial grooves provided in a tire radial direction on the respective sidewalls,
the sidewalls each having a maximum width position in a tire width direction,
when a distance between an innermost end position of the carcass ply in the tire radial direction and the maximum width position is defined as H, the radial grooves being provided between a position with a distance of 1/2H from the maximum width position toward an inner side in the tire radial direction and a position with a distance of 3/4H from the maximum width position toward an outer side in the tire radial direction.

3. The heavy duty tire according to claim 1, further comprising a plurality of radial grooves provided in the tire radial direction on the respective sidewalls,
wherein the at least one circumferential groove comprises a plurality of circumferential grooves, and
the radial grooves are provided between the position with the distance of 1/2H from the maximum width position toward the inner side in the tire radial direction and the position with the distance of 3/4H from the maximum width position toward the outer side in the tire radial direction.

4. The heavy duty tire according to claim 2, further comprising a plurality of circumferential grooves provided in a tire circumferential direction on the respective sidewalls,
wherein the circumferential grooves are provided between the position with the distance of 1/2H from the maximum width position toward the inner side in the tire radial direction and the position with the distance of 3/4H from the maximum width position toward the outer side in the tire radial direction.

5. The heavy duty tire according to claim 3 or 4, wherein a groove width of the respective circumferential grooves and the respective radial grooves is in a range of 4 to 6 mm, and a groove depth of the respective circumferential grooves and the respective radial grooves is in a range of 4 to 6 mm.

6. The heavy duty tire according to any one of claims 3 to 5, wherein a space between the circumferential grooves adjacent to each other is 30 mm or less, and a space between the radial grooves adjacent to each other is 30 mm or less.

7. The heavy duty tire according to any one of claims 3 to 6, wherein a groove bottom of the respective circumferential grooves and the respective radial grooves has a predetermined degree of curvature.
